# EUROPÄISCHE PATENTANMELDUNG

(11) **EP 2 620 746 A1**
(43) Veröffentlichungstag der Anmeldung: **31.07.2013**
(21) Anmeldenummer: 12153163.6
(22) Anmeldetag: 30.01.2012
(51) Int. Cl.: G01C 15/00, G01S 7/481

(54) **Vermessungsgerät mit Scanfunktionalität und Einzelpunktmessmodus**

(71) Anmelder: Hexagon Technology Center GmbH, 9435 Heerbrugg (CH)
(72) Erfinder: Metzler, Bernhard, A-6850 Dornbirn (AT); Hinderling, Jürg, CH-9437 Marbach (CH); Jensen, Thomas, CH-9400 Rorschach (CH)
(74) Vertreter: Kaminski Harmann

(57) **Zusammenfassung**

Vermessungsgerät mit einer eine Stehachse definierenden Basis, einem um die Stehachse relativ zur Basis schwenkbaren Aufbau und einer Strahlumlenkeinheit zur Ausrichtungsvariation einer Messachse, wobei die Strahlumlenkeinheit um eine Horizontalachse relativ zum Aufbau rotierbar ist. Ferner weist das Vermessungsgerät Entfernungsmessfunktionalität zur Entfernungsmessung vermittels der Messstrahlung, Winkelmessfunktionalität zur Bestimmung einer Ausrichtung der Messachse relativ zur Basis, eine Steuerungs- und Verarbeitungseinheit zur Datenverarbeitung und zur Steuerung des Vermessungsgeräts und eine Scanfunktionalität auf, wobei bei deren Ausführung ein Scannen mit einem Erzeugen einer die Scanpunkte aufweisenden Punktwolke erfolgt. Der Aufbau weist ferner ein Abbildungssystem mit einer Abbildungsoptik und einer Bildebene zur Erzeugung und graphischen Bereitstellung einer Abbildung eines Sichtfeldes auf, wobei das Sichtfeld durch das Abbildungssystem und die Strahlumlenkeinheit definiert ist und zusammen mit der Messachse vermittels der Strahlumlenkeinheit ausrichtbar ist und die Abbildung des Sichtfeldes in der Bildebene mittels einer Abbildungsfokussierung durch eine Fokussiergruppe graphisch scharf bereitstellbar ist. Das Vermessungsgerät weist einen Einzelpunktmessmodus auf, wobei in dessen Rahmen die Messachse auf einen Zielpunkt ausrichtbar ist, die Entfernung zum Zielpunkt und die Ausrichtung der Messachse bestimmbar sind, und eine Position des Zielpunkts in Abhängigkeit von der Entfernung und von der Ausrichtung der Messstrahlung bestimmbar ist.

## Beschreibung

Die Erfindung betrifft ein Vermessungsgerät mit einer Strahlquelle zur Erzeugung einer Messstrahlung und einer Umlenkeinheit zur Ausrichtung der Messstrahlung relativ zu einer Basis nach dem Oberbegriff des Anspruchs 1.

Zur Erfassung von Objekten oder Oberflächen werden häufig Verfahren verwendet, welche die Topographie einer Struktur, wie z.B. eines Bauwerks, sukzessive abtasten und dabei aufnehmen. Eine solche Topographie stellt dabei eine zusammenhängende und die Oberfläche des Objekts beschreibende Folge von Punkten oder aber ein entsprechendes Modell oder eine Beschreibung der Oberfläche dar. Ein gängiger Ansatz ist das Abtasten mittels eines Laserscanners, der jeweils die räumliche Position eines Oberflächenpunktes erfasst, indem durch den Laser die Entfernung zum angezielten Oberflächenpunkt gemessen und diese Messung mit den Winkelinformationen der Laseremission verknüpft werden. Aus diesen Entfernungs- und Winkelinformationen kann die räumliche Lage des jeweils erfassten Punktes bestimmt und die Oberfläche fortlaufend vermessen werden. In vielen Fällen wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bzgl. der Oberflächentextur, bereitstellt.

So wird beispielsweise in der WO 97/40342 ein Verfahren beschrieben, welches durch ortsfest aufgestellte Scanersysteme eine Topographie aufnimmt. Für diese Systeme wird ein fixer Aufstellungspunkt gewählt, der als Basis eines durch Motoren bewirkten Scanvorgangs dient. Die dreidimensionale Ortsinformation des jeweiligen Oberflächenpunktes ist über die Entfernung zum gemessenen Punkt, die Winkelstellung im Zeitpunkt der Messung und den bekannten Standort der scannenden Vorrichtung ableitbar. Dabei sind die Scannersysteme speziell für die Aufgabe der Topographieerfassung ausgelegt und tasten eine Oberfläche durch Bewegung des Scannersystems oder durch Veränderung des Strahlgangs ab.

Andere Verfahren verwenden mobile Systeme, die eine zu erfassende Struktur durch eine Bewegung des Scannersystems abtasten bzw. die Abtastung unterstützen oder ergänzen. Solche Systeme eignen sich besonders zur Erfassung von linearen oder linear befahrbaren Strukturen, wie beispielsweise Gleisanlagen, Strassen, Tunnelsysteme oder Flugfelder.

Durch solche aus dem Stand der Technik bekannte Erfassungsvorgänge werden Bilder bzw. topographische Daten bereitgestellt, die im Wesentlichen die Information über die räumliche Verteilung oder Anordnungsbeziehung von Oberflächenpunkten repräsentieren. Gegebenenfalls erlauben zusätzlich aufgenommene Bilder die Ableitung weiterer Informationen. Damit sind die Struktur und der Verlauf der Oberfläche vergleichsweise gut rekonstruierbar. Nachteilig sind jedoch die fehlenden qualitativen Angaben über die Art und Beschaffenheit der Oberfläche, insbesondere in Hinblick auf die innere Struktur oder Zusammensetzung. So erlauben parallel zur Abtastung aufgenommene Bilder zumeist die Identifikation unterschiedlicher Helligkeitswerte. Ferner beschreibt die EP 1 759 172 ein Scannersystem und ein Verfahren zur Erfassung von Oberflächen in spektral aufgelöster Form, das ein Ableiten von Oberflächeneigenschaften aus der dadurch gewonnen Information bereitstellt.

Derartige Laserscanner nach dem Stand der Technik befähigen einen Benutzer grosse Oberflächen und Objekte mit einem relativ geringen Zeitaufwand - in Abhängigkeit einer gewünschten Punkt-Zu-Punkt-Auflösung - vollständig und gegebenenfalls mit zusätzlichen Objektinformationen zu erfassen. Laserscanner sind dabei typischerweise derart ausgestaltet, dass primär Punktwolken mit einer grossen Anzahl von Messpunkten erfasst werden können und dieses Erfassen mit einer hinreichenden Genauigkeit erfolgt. Da Laserscanner nicht über ein Anzieleinrichtung zur hochpräzisen Anzielung eines Ziels verfügen, genügt diese Genauigkeit der dabei ableitbaren Punktkoordinaten nicht den hohen geodätischen Genauigkeitsstandards, wie diese beispielsweise für moderne Vermessungsgeräte, insbesondere für Totalstationen oder Thoedoliten, etabliert sind.

Moderne Totalstationen weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge nicht genügend präzise angezielt werden können (d.h. nicht geodätische Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert. Beispielsweise wird in der EP 2 141 450 ein Vermessungsgerät mit Funktion zur automatischen Anzielung eines retroreflektierenden Ziels sowie mit automatischer Zielverfolgungsfunktionalität beschrieben.

Daneben können scannende Funktionen in Totalstationen oder Theodoliten als Zusatzfunktionen integriert werden. Aus der WO 2004/036145 ist beispielsweise ein geodätisches Messgerät bekannt, das von seiner Position aus innerhalb des erfassten Bereichs einen Laserstrahl zur Entfernungsmessung emittiert. Solche Messgeräte können ebenfalls zur abtastenden Erfassung von Oberflächen modifiziert bzw. ohne Modifikation betrieben werden. Ein Beispiel hierfür stellen motorisierte Theodolite oder Totalstationen dar.

Mit derartigen modernen Vermessungsgeräten können die Koordinaten von anzumessenden Zielpunkten mit einer sehr hohen geodätischen Präzision bestimmt werden. Hierfür muss der Laserstrahl zuerst sehr genau auf das Ziel ausgerichtet und in diesem Anzielzustand die Entfernung zum Ziel und eine Ausrichtung des Laserstrahls bestimmt werden. In Folge kann eine Position des Ziels (zumindest relativ zum Vermessungsgerät) abgeleitet werden. Nachteilig dabei ist jedoch, dass eine grossflächige topographische Objektvermessung z.B. mit einer Totalstation daher einen unverhältnismässig hohen Zeitaufwand - verglichen mit einem Messvorgang eines Laserscanners an dem Objekt - bedeutet, insbesondere bedingt durch die Masse das auszurichtenden Teleskops.

In Abhängigkeit einer gestellten Vermessungsaufgabe kann ein Vermesser somit entweder einen Laserscanner oder eine Totalstation bzw. einen Theodoliten zur Bearbeitung der Aufgabe benötigten. Ausserdem kann beispielsweise sowohl ein Scan einer Oberfläche als auch eine präzise Punktbestimmung eines auf der Oberfläche oder einem anderen Objekt befindlichen einzelnen Zielpunkts im Rahmen derselben Vermessung erforderlich sein. Generell müssen somit zwei unterschiedlich ausgelegte Geräte, nämlich ein Laserscanner zum Scannen von Oberflächen und eine Totalstation zur geodätisch genauen Bestimmung einer Zielpunktposition, vorgehalten werden. Dies stellt einen grossen Nachteil, sowohl hinsichtlich der Anzahl mitzuführender bzw. bereitzuhaltender Geräte und Peripherie, hinsichtlich der damit verbundenen Anschaffungskosten als auch hinsichtlich des Lernaufwands zur fachgerechten Bedienung beider Geräte dar.

Es ist daher eine Aufgabe der vorliegenden Erfindung ein verbessertes Vermessungsgerät bereitzustellen, welches einem Benutzer eine vereinfachte Bearbeitung von unterschiedlichen Vermessungsaufgaben ermöglicht.

Es ist eine weitere Aufgabe der Erfindung ein verbessertes Vermessungsinstrument bereitzustellen, welches neben einer hoch präzisen Zielpunktbestimmungsmöglichkeit eine Funktionalität zur schnellen Erfassung einer Vielzahl von Zielpunkten mit - relativ zu einer mehrfachen präzisen Zielpunktbestimmung - kleinem Zeitaufwand ermöglicht.

Eine dritte Aufgabe der vorliegenden Erfindung ist ein verbessertes Vermessungsgerät bereitzustellen, welches sowohl zur schnellen Punktaufnahme mit rasterartiger Objektabtastung als auch zur präzisen Absteckung von Planpunkten, das heisst zur Übertragung von Plandaten in ein Gelände, ausgebildet ist.

Eine spezielle Aufgabe der vorliegenden Erfindung ist es ein verbessertes Vermessungsgerät bereitzustellen, welches die Vorteile eines Laserscanners - insbesondere schnelles Abscannen eines Objekts - und die Vorteile einer Totalstation bzw. eines Theodoliten - insbesondere hochpräzises Positionsbestimmen eines Zielpunktes und/oder hochpräzise Winkelbestimmung beziehungsweise Abstandsbestimmung zwischen zwei Punkten - in sich vereint und die oben genannten Nachteile dadurch überwindet.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beschreibt ein Vermessungsgerät, welches die Funktionalität einer Totalstation und eines Laserscanners in sich vereint. Dies ermöglicht einerseits das genaue Anzielen und Aufnehmen oder Abstecken von Einzelpunkten und andererseits das effiziente Erfassen von grossen Punktwolken.

Die Erfindung betrifft ein Vermessungsgerät, welches sowohl das genaue Anzielen und Aufnehmen oder Abstecken von Einzelpunkten als auch das effiziente Erfassen von grossen Punktwolken ermöglicht. Dazu kann das Vermessungsgerät in wenigstens drei Messmodi betrieben werden - einem Einzelpunktmessmodus, einem Scanmodus und dem Einzelpunktscanmodus. Ein Vorteil besteht darin, dass sowohl Verfahren, welche herkömmlich mit Totalstationen, und Verfahren, welche mit Laserscannern ausgeführt werden, mit nur einem erfindungsgemässen Vermessungsgerät ausgeführt werden können. Besonders ist von Vorteil, dass diese Verfahren auch abwechselnd bzw. in Kombination durchgeführt werden können, ohne dass das eingesetzte Vermessungsgerät gewechselt werden muss. Folglich können alle Messdaten in einem gemeinsamen Koordinatensystem erfasst werden.

Weitere Vorteile ergeben sich dadurch, dass erfindungsgemäss anstelle des Fernrohrs lediglich eine Strahlumlenkeinheit mit grosser Geschwindigkeit rotiert, welche einerseits eine geringere Masse als ein Fernrohr (wie typischerweise für Totalstation vorgesehen) aufweist und somit höhere Rotationsgeschwindigkeiten ermöglicht.

Die Erfindung betrifft ein Vermessungsgerät mit einer Strahlquelle zur Erzeugung von Messstrahlung, einer eine Stehachse definierenden Basis und einem um die Stehachse relativ zur Basis schwenkbaren Aufbau mit einer Eintrittsfläche und einer Austrittsfläche, insbesondere wobei die Eintrittsfläche und die Austrittsfläche identisch sind. Ausserdem weist das Vermessungsgerät eine Strahlumlenkeinheit zur Ausrichtungsvariation einer durch eine Emissionsrichtung der Messstrahlung definierten Messachse auf, wobei die Strahlumlenkeinheit um eine Horizontalachse relativ zum Aufbau rotierbar ist, und derart relativ zum Aufbau angeordnet ist, dass aus dem Austrittsfenster austretende Messstrahlung auf die Strahlumlenkeinheit trifft und vermittels dieser zu einem Objekt lenkbar ist und vom Objekt reflektierte, auf die Strahlumlenkeinheit treffende Messstrahlung vermittels dieser auf das Eintrittsfenster gerichtet wird. Zudem verfügt das Vermessungsgerät über eine Entfernungsmessfunktionalität zur Entfernungsmessung zu dem Objekt vermittels der Messstrahlung, eine Winkelmessfunktionalität zur Bestimmung einer Ausrichtung der Messachse relativ zur Basis, eine Steuerungs- und Verarbeitungseinheit zur Datenverarbeitung und zur Steuerung des Vermessungsgeräts, und eine Scanfunktionalität. Bei Ausführung der Scanfunktionalität erfolgt automatisch gesteuert durch die Steuerungs- und Verarbeitungseinheit ein Scannen mit einer Rotation der Strahlumlenkeinheit um die Horizontalachse und einem Schwenken des Aufbaus um die Stehachse, insbesondere gleichzeitig, mit einem Bestimmen der jeweiligen Entfernung und der jeweiligen Ausrichtung der Messstrahlung für innerhalb eines bestimmten Scanbereichs liegende Scanpunkte, insbesondere in einer vorbestimmten Scanpunktauflösung, und mit einem Erzeugen einer die Scanpunkte aufweisenden Punktwolke.

Ferner weist der Aufbau des erfindungsgemässen Vermessungsgeräts ein Abbildungssystem mit einer eine Fokussiergruppe aufweisenden Abbildungsoptik und einer Bildebene zur Erzeugung und graphischen (visuellen) Bereitstellung einer Abbildung eines Sichtfeldes auf, wobei das Sichtfeld durch das Abbildungssystem und die Strahlumlenkeinheit definiert ist, zusammen mit der Messachse vermittels der Strahlumlenkeinheit ausrichtbar ist und die Abbildung des Sichtfeldes in der Bildebene mittels einer Abbildungsfokussierung durch die Fokussiergruppe graphisch (visuell) scharf bereitstellbar ist. Des Weiteren weist das Vermessungsgerät einen Einzelpunktmessmodus auf, wobei in dessen Rahmen die Messachse auf einen Zielpunkt ausrichtbar ist, insbesondere auf ein retroreflektierendes Prisma oder eine Reflexzielmarke, und bei Auslösung einer Einzelpunktmessung automatisch gesteuert durch die Steuerungs- und Verarbeitungseinheit die Entfernung zum Zielpunkt und die Ausrichtung der Messachse sowie eine Position des Zielpunkts in Abhängigkeit von der Entfernung und von der Ausrichtung der Messachse bestimmt werden.

Im Rahmen der Erfindung kann die Strahlquelle beispielsweise als Laserdiode ausgebildet sein und die damit emittierbare Messlaserstrahlung durch die Austrittsfläche bzw. die Eintrittsfläche des Aufbaus, welche beispielsweise durch ein optisch durchlässiges Medium verkörpert sein können, gelenkt werden. Die Führung der Strahlung kann dabei mittels eines im Aufbau angeordneten Abbildungssystems (optische Einheit) erfolgen, wobei dieses Abbildungssystem z.B. Strahlumlenkelemente Zoom- und/oder Fokussierkomponenten, eine Bilderfassungseinheit, die Strahlquelle, einen Detektor, einen Entfernungsmesser bzw. ein Distanzmessmodul und/oder einen positionssensitiven Detektor oder eine bildbasierte Messkamera aufweisen kann.

Die Messstrahlung wird bei Verlassen des Aufbaus durch die Austrittsfläche auf die Strahlumlenkeinheit, die beispielsweise als reflektierendes Element, insbesondere Spiegel, ausgeführt sein kann, gerichtet und kann durch ein Rotieren der Strahlumlenkeinheit bezüglich ihrer Ausrichtung variiert werden. In umgekehrter Richtung kann Messstrahlung, die an einem Objekt zurück zum Vermessungsgerät reflektiert wird mittels der Strahlumlenkeinheit durch die Eintrittsfläche gelenkt so im Aufbau bzw. dem Abbildungssystem zur Entfernungsbestimmung bereitgestellt werden.

Die Erfassung einer Punktwolke im Rahmen der Scanfunktionalität erfolgt mittels einem Rotieren der Strahlumlenkeinheit und einem Schwenken des Aufbaus, sodass die Messachse in zwei Richtungen abgelenkt werden kann und so ein vorher definierter Scanbereich abgetastet werden kann. Dabei kann ausserdem eine Punktauflösung, d.h. beispielsweise die Menge der zu erfassenden Punkte im Scanbereich, bestimmt werden.

Zur erfindungsgemässen Bereitstellung eines zusätzlichen Einzelpunktsmessmodus sind eine Fokussiergruppe und ein Abbildungssystem derart vorgesehen, dass ein Abbild eines Sichtfeldes erzeugt und als Bild in einer scharfen Darstellung bereitgestellt werden kann. Das durch die Abbildungsoptik und die Bildebene definierte Sichtfeld wird ebenfalls durch die Strahlumlenkeinheit ausgerichtet, wobei die Gestalt des Sichtfeldes zudem durch die optischen Eigenschaften des Abbildungssystems und der Strahlumlenkeinheit beeinflusst sein kann.

Für die Fokussierung der Abbildung kann beispielsweise ein Drehknopf oder eine Taste am Aufbau angeordnet, bei dessen Betätigung Komponenten der Fokussiergruppe relativ zueinander so verstellt werden, dass die Abbildung schärfer oder weniger scharf bereitgestellt wird.

Im Rahmen des Einzelpunktsmessmodus ist ein Zielpunkt hochpräzise mit geodätischer Genauigkeit, insbesondere durch eine entsprechende Ausrichtung der Strahlumlenkeinheit, anzielbar. Ferner können im Rahmen des Einzelpunktsmessmodus Plan- oder Zielpunkte ins Feld übertragen werden (Punktabsteckung), wobei die Koordinaten oder Positionselemente in einem Speicher vorliegen und die Ausrichtung der Strahl- oder Bildumlenkeinheit in Richtung des jeweiligen abzusteckenden Punktes manuell oder automatisch vorgenommen wird. Ausserdem ist unter der Bezeichnung Einzelpunktmessmodus auch eine dem Vermesser bekannte repetitive Tracking-Funktion klassifiziert. Vermittels des Einzelpunktsmessmodus können durch die präzise Ausrichtung der Messachse somit eine Entfernung zum Zielpunkt, eine Richtung in Azimut und Elevation und dadurch eine Zielpunktposition (winkel-)sekundengenau bestimmt werden.

Hinsichtlich der Ausrichtung der Strahlumlenkeinheit kann der Aufbau erfindungsgemäss einen Verstellmechanismus mit einem Drehknopf oder Taster zur Ausrichtung der Strahlumlenkeinheit aufweisen, wobei die Strahlumlenkeinheit durch manuelle Betätigung des Drehknopfes präzise ausrichtbar ist. Der Verstellmechanismus kann dabei unterschiedliche

Übersetzungsstufen für die Ausrichtung der Strahlumlenkeinheit bzw. des Aufbaus aufweisen. Beispielsweise können ein Grobtrieb und ein Feintrieb vorgesehen sein, wobei der Grobtrieb als Geber für den motorischen Achsenantrieb eine Übersetzung von z.B. 1:1 oder 5:1 hinsichtlich der Drehung der Strahlumlenkeinheit und der Feintrieb eine Übersetzung von z.B. 200:1, d.h. bei zweihundert Umdrehungen des Feintriebs erfolgt eine Umdrehung der Strahlumlenkeinheit, aufweisen kann. Des Weitern kann jeweils ein Drehknopf mit einem der Triebe verbunden sein und dadurch eine manuelle Justierung bereitstellen. Zusätzlich kann jedem Trieb ein Motor zugeordnet sein, wodurch eine motorisierte Ausrichtung der Strahlumlenkeinheit durchgeführt werden kann.

Zur Bereitstellung der Abbildung, insbesondere einem Benutzer des Vermessungsgeräts, kann der Aufbau erfindungsgemäss ein Okular zur graphischen oder visuellen Bereitstellung der Abbildung aufweisen, insbesondere zusammen mit einer die Emissionsrichtung oder Zielrichtung anzeigenden Markierung, z.B. einem Fadenkreuz. Das Okular kann dabei derart am Aufbau angeordnet sein, dass die Abbildung in der Bildebene bei einem Durchblicken durch das Okular von einem Benutzer erfasst werden kann. Das Okular kann somit die Abbildung derart darstellen, dass ein Benutzer diese scharf wahrnehmen kann. Insbesondere für die Durchführung einer Einzelpunktmessung kann somit ein Zielpunkt in einer Messumgebung durch das Okular beobachtet und die Messachse auf den Zielpunkt ausgerichtet werden.

Bei Verwendung einer rein visuellen Anzielvorrichtung kann sich das Bild abhängig vom Elevationswinkel der Strahlumlenkeinheit um die Zielachse verdrehen. Beispielsweise ist das Bild im Zenith um 90° und in einer zweiten Horizontallage um 180° rotiert zu sehen. Für eine angepasste Darstellung des Bildes kann insbesondere ein elektronisches Sichtsystem in Verbindung mit einer Kamera eingesetzt werden, wobei z.B. eine Rotation des erfassten Bildes in Abhängigkeit des Elevationswinkels erfolgt. Hierfür sind beispielsweise im Zusammenhang mit Camcordern hochauflösende OLED-Displays bekannt, welche die visuelle Information in der Bildebene erzeugen können und wobei das Bild mittels eines Okulars vergrössert dem Auge zugeführt werden kann. In diesem Zusammenhang kann das Abbildungssystem bzw. der Aufbau eines erfindungsgemässen Vermessungsgeräts eine Messkamera zur Erfassung der Abbildung aufweisen, insbesondere wobei die graphische Bereitstellung der Abbildung mittels einer mit der Messkamera zusammenwirkenden elektro-optischen Anzeige erfolgen kann. Die Messkamera ist dabei zur Aufnahme eines Bildes korrespondierend zum Sichtfeld des Abbildungssystems vorgesehen und kann jeweils ein Bild entsprechend der Sichtfeldausrichtung, die durch die Stellung der Strahlumlenkeinheit und des Aufbaus definiert ist, erfassen und Signale für die graphische Darstellung des Bildes bereitstellen. Die Signale können zu einer elektro-optischen Anzeige, z.B. einem Display, übertragen werden, wodurch das erfasste Bild darauf darstellbar ist. Beispielsweise kann so das Sichtfeld im Strahlengang, z.B. in der optischen Einheit bzw. im Abbildungssystem, mit der Messkamera abgebildet, das Bild auf dem Display dargestellt und durch das Okular betrachtet werden.

Zusätzlich kann der Aufbau erfindungsgemäss eine Übersichtskamera mit einem Übersichts-Sichtfeld aufweisen, wobei das Übersichts-Sichtfeld grösser als das Sichtfeld der Messkamera ist, insbesondere wobei das Übersichts-Sichtfeld vermittels der Strahlumlenkeinheit ausrichtbar ist. Mit der Übersichtskamera kann somit ein grösserer Bereich des Geländes, in welchem sich beispielsweise der Zielpunkt befindet, erfasst und z.B. auf einem Display am Aufbau ausgegeben werden, wodurch eine bessere Orientierung und ein schnelleres Anzielen eines gewünschten Punkts erfolgen kann. Das Übersichts-Sichtfeld kann dabei z.B. mittels der Vorder- oder Rückseite der Strahlumlenkeinheit ausgerichtet werden.

Hinsichtlich des Anzielens eines gewünschten Zielpunkts kann das Abbildungssystem erfindungsgemäss eine optische Zoomgruppe zur Variation eines Abbildungsmassstabes der Abbildung auf der Bildebene aufweisen. So können beispielsweise Zielpunkte sowohl in grosser Entfernung als auch in der Nähe des Vermessungsgeräts derart vergrössert bereitgestellt werden, dass z.B. ein Benutzer darauf jeweils den Zielpunkt deutlich und positionsgenau erkennen kann. Im Falle eines elektrooptischen Sichtsystems kann eine Veränderung des Abbildungsmassstabs elektronisch auch derart erfolgen, dass der relevante Bildausschnitt (ROI, region of interest) verkleinert wird, und somit auf dem Display eine Zoomwirkung entsteht. Dabei wird beispielsweise nicht das in Abhängigkeit der Kameraauflösung voll erfassbare Bild dargestellt, sondern ein Bereich so gewählt, dass bei einer Bilddarstellung keine Auflösungsreduktion erzeugt wird.

Die Strahlumlenkeinheit kann erfindungsgemäss als reflektierendes Umlenkelement ausgebildet sein, insbesondere als Spiegel. Alternativ kann die Strahlumlenkeinheit das Umlenken der Messstrahlung oder des Sichtfeldes mittels einer geeigneten Anordnung von optischen Bauteilen gewährleisten.

Zusätzlich zur Scanfunktionalität und zum Einzelpunktmessmodus kann ein erfindungsgemässes Vermessungsgerät eine Einzelpunktscanfunktionalität aufweisen, wobei bei Ausführung der Einzelpunktscanfunktionalität zu einer Vielzahl von Einzelpunkten innerhalb eines Einzelpunktbereichs jeweils die Entfernung und die Ausrichtung der Messstrahlung bestimmt werden, eine die Einzelpunkte aufweisende Einzelpunkt-Punktwolke erzeugt wird und aus der Einzelpunkt-Punktwolke mittels eines Algorithmus zur Punktwolkenanalyse die Position des Zielpunkts abgeleitet wird. Diese Funktionalität nutzt gegebenenfalls Bildverarbeitungsmethoden um die innerhalb des Einzelpunktbereichs erfassten Bilder oder Punktwolken zu analysieren und auf Basis dieser Analysen einen Zielpunkt zu bestimmen. Generell kann die Position des Zielpunkts mittels Algorithmen zur Verarbeitung von 3D-Punktwolken bestimmt werden.

Die Messung von Entfernungen zu Zielpunkten bzw. Scanpunkten kann erfindungsgemäss mit einer Entfernungsmesseinheit erfolgen, wobei die Messeinheit mit zwei unterschiedlichen Modi betrieben werden kann. Insbesondere kann im Einzelpunktmessmodus die Bestimmung der Entfernung zum Zielpunkt in einem ersten Entfernungsmessmodus erfolgen, wobei eine bestimmte Anzahl von Entfernungsmesswerten für den Zielpunkt bestimmt und gemittelt wird. Zudem kann im Rahmen der Scanfunktionalität die Bestimmung der Entfernung zu den Scanpunkten in einem zweiten Entfernungsmessmodus erfolgen, wobei eine im Vergleich zu dem ersten Entfernungsmessmodus geringere Anzahl von Entfernungsmesswerten, insbesondere ein einziger Entfernungsmesswert, für jeweils einen der Scanpunkte bestimmt und gegebenenfalls gemittelt wird.

Durch eine derartige Verwendung der Messmodi mit den jeweiligen Vermessungsaufgaben können mit nur einer strukturellen Entfernungsmessfunktionalität und den selektiven Betriebsmodi für diese Funktionalität verschiedenartige Messungen mit z.B. unterschiedlichen Messgenauigkeiten oder Punktauflösungen durchgeführt werden. So kann für das Bestimmen einer einzelnen Punktposition eine durch die Mittelung einer Vielzahl von Messwerten realisierbare hohe Messgenauigkeit erreicht werden. Ausserdem kann im Rahmen eines Scannens mit einer geringeren Genauigkeit eine grössren Anzahl Messpunkte positionsmässig erfasst werden.

Weiters kann das Vermessungsgerät erfindungsgemäss eine derart ausgestaltet Umschaltfunktion aufweisen, dass bei Ausführung der Umschaltfunktion ein Umschalten zwischen dem Einzelpunktmessmodus und der Scanfunktionalität erfolgt, insbesondere zwischen dem Einzelpunktmessmodus, der Scanfunktionalität oder der Einzelpunktscanfunktionalität, insbesondere in Abhängigkeit einer Benutzereingabe. Damit kann insbesondere einem Benutzer ein einfaches Umschalten zwischen den unterschiedlichen Messmodi bereitgestellt werden, wobei der Benutzer z.B. durch nur einen Knopfdruck von einem Modus zu einem anderen wechseln kann.

Zur Steigerung der Messgenauigkeit und der Robustheit bzw. Verlässlichkeit erzeugter Messwerte kann ein erfindungsgemässes Vermessungsgerät einen Neigungssensor zur Messung einer in der Regel 2-dimensionalen Neigung des Vermessungsgeräts relativ zum Gravitationsvektor aufweisen, wobei in Abhängigkeit von einer gemessenen Neigung ein Messwert für die Ausrichtung der Messstrahlung korrigierbar ist. Mittels des Neigungssensors kann somit eine allfällige Schieflage des Vermessungsgeräts relativ zu einer Horizontalen bzw. relativ zur Richtung des Erdschwerefelds bestimmt werden, wobei die damit bestimmten Neigungswerte für eine Korrektur oder Kompensation einer Ausrichtung der Messachse herangezogen werden können. Ausserdem können die Neigungswerte auf einem Display am Aufbau ausgegeben werden und es kann in Abhängigkeit dieser Werte eine Ausrichtung des Vermessungsgeräts erfolgen.

Insbesondere kann erfindungsgemäss das Abbildungssystem ein Strahlvariationsmodul zur Abschwächung und/oder Aufweitung und/oder wellenlängenabhängigen Filterung durch Einbringung des Strahlvariationsmoduls in einen Strahlengang der Messstrahlung aufweisen. Eine solche Aufweitung oder Abschwächung der Messstrahlung kann insbesondere bei der Verwendung des Vermessungssystems als Totalstation vorteilhaft sein, da die Leistung der Messstrahlung zur Ausführung der Scanfunktionalität derart hoch angepasst sein kann, dass bei einer Verwendung derselben Strahlintensität für eine Einzelpunktmessung eine Übersteuerung der Detektoren zum Empfang der Messstrahlung resultieren kann (da die dabei angezielten Messpunkte teilreflektierend oder retroreflektierend sein können und somit die Messstrahlung nicht diffus zurück zum Vermessungsgerät reflektieren, sondern gerichtet).

Ein Aspekt der Erfindung betrifft ein Feinanzielen und Verfolgen von Zielen, insbesondere fortlaufendes Verfolgen. Hierfür kann der Aufbau erfindungsgemäss eine Anziel- und Zielverfolgungsvorrichtung mit einem positionssensitiven Detektor aufweisen, wobei eine an einer Reflektoreinheit (z.B. Zielmarke oder Reflektor) reflektierte Messstrahlung mit dem positionssensitiven Detektor erfassbar ist und eine Ablage der erfassten Messstrahlung relativ zu einem Referenzpunkt auf dem (Flächen-) Detektor bestimmbar ist, insbesondere wobei die Anziel- und Zielverfolgungsvorrichtung im Abbildungssystem angeordnet sein kann. Im einfachsten Fall besteht das empfangsseitige Abbildungssystem der Zielverfolgungsvorrichtung dabei lediglich aus einem Objektiv mit konstanter Brennweite, beispielsweise aus den optischen Bauelementen vor der Fokussiereinheit des oben beschriebenen Abbildungssystems. Die Anziel- und Zielverfolgungsvorrichtung kann erfindungsgemäss eine weitere Strahlquelle zur Emission von Laserstrahlung aufweisen, insbesondere wobei eine an der Reflektoreinheit (Zielmarke oder Reflektor) reflektierte Laserstrahlung als Messstrahlung zur Bestimmung der Ablage auf dem positionssensitiven Detektor heranziehbar ist. Ausserdem kann erfindungsgemäss die Messachse in Abhängigkeit von der Ablage automatisch gesteuert derart ausrichtbar sein, dass die Messstrahlung fortlaufend auf ein Zentrum der Reflektoreinheit ausgerichtet wird.

Zielobjekte können anhand der Visiereinrichtung trotz der oft bereitgestellten sehr grossen optischen Vergrösserung mit blossem Auge nicht genügend präzise angezielt werden, weshalb gängige Vermessungsgeräte eine automatische Anzielund Zielverfolgungsvorrichtung mit entsprechender Funktionalität für als Reflektoreinheit dienende Tripel-Prismen oder Reflexfolie (ATR: "Automatic Target Recognition") aufweisen können. Beispielsweise wird in der EP 2 141 450 ein Vermessungsgerät mit einer derartigen Funktion zur automatischen Anzielung eines retroreflektierenden Ziels sowie mit automatischer Zielverfolgungsfunktionalität beschrieben.

Im Rahmen der ATR-Feinanzielfunktion mit der Anziel- und Zielverfolgungsvorrichtung kann dabei der Messstrahl bzw. ein spezifischer, in der Regel stark divergenter ATR-Messstrahl in Richtung der Anzielrichtung (Messachse) emittiert, dieser am Ziel retroreflektiert und der reflektierte Strahl vom positionssensitiven Detektor (ATR-Sensor) erfasst werden. Je nach Abweichung der Ausrichtung der Messachse vom Zentrum der Reflektoreinheit weicht dabei auch die Auftreffposition der reflektierten Strahlung auf dem positionssensitiven Detektor (ATR-Sensor) von einer zentralen Sensorflächenposition ab. Die an der Reflektoreinheit retroreflektierte ATR-Messstrahlung erzeugt auf dem ATR-Flächensensor (CCD-Kamera, CMOS-Sensor, positionssensitiver Detektor) einen Lichtfleck, welcher nicht im kalibrierten Nullpunkt des ATR-Flächensensors liegt. Die Abweichung zwischen ATR-Positionssignalen und dem Nullpunkt zeigen die Richtungsabweichung in Azimut und Elevation zur Sollposition an. Der Nullpunkt entspricht dabei der Messachse des erfindungsgemässen Systems, worauf sich die Winkelmesssensoren für Azimut und Elevation beziehen. Aus den gemessenen Richtungen zur Sollposition kann motorisiert die Ausrichtung der Strahlumlenkeinheit derart nachgestellt werden, dass der an der Reflektoreinheit retroreflektierte ATR-Messstrahl hochpräzise im Zentrum der Sensorfläche auf dem ATR-Flächensensor auftrifft (d.h. der Horizontal- oder Azimutwinkel der Strahlumlenkeinheit und der Vertikal- oder Elevationswinkel des Aufbaus werden derart iterativ geändert und angepasst, bis das Zentrum des Reflexflecks mit der Soll-Position auf dem ATR-Flächensensor zusammenfällt). Alternativ kann eine Rest-Abweichung zwischen Auftreffpunkt des retroreflektierten ATR-Messstrahls auf dem ATR-Sensor und dem Nullpunkt der Sensorfläche auch rechnerisch berücksichtigt und in entsprechende Winkel umgewandelt werden, welche zu dem - anhand der Winkelsensoren erfassten - Richtung, in die die Messachse zeigt, entsprechend addiert wird. D.h., die Richtung zum einen markierten Zielpunkt kann in diesem Fall auch abgeleitet werden aus dem - anhand der Winkelsensoren erfassten - Richtung der Messachse und einer Ablage des detektierten ATR-Messstrahl-Reflexes vom Sensorzentrum (d.h. von jenem kalibrierten Nullpunkt auf dem ATR-Sensor, an dem die Zielachse des Systems abgebildet wird). Dadurch kann die erzielbare Genauigkeit bei der Ausrichtung der Strahlumlenkeinheit (und des Aufbaus) auf ein Tripel-Prisma oder Zielmarke gegenüber einer manuell erfolgenden Anzielung mit Fadenkreuz und basierend auf blossem Augenmass deutlich erhöht werden.

Zum schnellen Auffinden von Zielmarken wie Reflexfolien kann der erfinderische Aufbau ein Zielsuchmodul mit einer Sendeeinheit zur Emission von Suchstrahlung in Form eines Lichtfächers und einer Empfangseinheit zur Detektion von zumindest einem Teil einer reflektierten Suchstrahlung aufweisen.

Das Zielsuchmodul (Powersearch) kann dabei fix am Aufbau platziert sein und somit um die vertikale oder horizontale Achse um 360° verschwenkbar sein. Die Sendeeinheit und die Empfangseinheit können zueinander biaxial angeordnet sein und zwei nebeneinander platzierte vertikale Lichtfächer aufspannen. Die Sendeeinheit kann ein Signal aussenden, welches von einem kooperativen Ziel reflektiert, von der Empfangseinrichtung empfangen und in Echtzeit nach Amplitude und Laufzeit ausgewertet werden kann. So können beispielsweise Entfernung und Reflektionsgrad des Zielobjekts ermittelt und potentielle Ziele erkannt werden. Ein weiterer Aspekt der Erfindung ist ein Messverfahren zur Positionsbestimmung von zumindest einem Punkt mit einem erfindungsgemässen Vermessungsgerät, wobei im Rahmen des Messverfahrens selektiv durch Auswahl eines Benutzers ein Scannen oder ein Einzelpunktmessen ausgeführt wird. Das Scannen erfolgt mit einem Rotieren der Strahlumlenkeinheit um die Horizontalachse und einem Schwenken des Aufbaus um die Stehachse, insbesondere gleichzeitig, einem Bestimmen der jeweiligen Entfernung und der jeweiligen Ausrichtung der Messstrahlung für die Scanpunkte innerhalb eines bestimmten Scanbereichs, insbesondere in einer vorbestimmten Scanpunktauflösung, und einem Erzeugen einer die Scanpunkte aufweisenden Punktwolke. Das Einzelpunktmessen erfolgt mit einem hochpräzisen Ausrichten der Messstrahlung auf einen Zielpunkt, einem Bestimmen der Entfernung zum Zielpunkt und der Ausrichtung der Messachse und einem Bestimmen einer Position des Zielpunkts in Abhängigkeit von der Entfernung und von der Ausrichtung der Messachse.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine erste Ausführungsform eines erfindungsgemässen Vermessungsgeräts in einer Rückansicht;
- Fig.2: eine weitere Ausführungsform eines erfindungsgemässen Vermessungsgeräts in einer Vorderansicht;
- Fig.3: eine weitere Ausführungsform eines erfindungsgemässen Vermessungsgeräts;
- Fig.4a-b: jeweils ein Strahlvariationsmodul für ein erfindungsgemässes Vermessungsgerät;
- Fig.5a-c: jeweils eine Ausführungsform für die Anordnung von Messkamera und Übersichtskamera bzw. für die Ausrichtung der jeweiligen Kamerasichtfelder für ein erfindungsgemässes Vermessungsgerät;
- Fig.6a-c: jeweils eine Ausführungsform eines Abbildungssystems für ein erfindungsgemässes Vermessungsgerät; und
- Fig.7a-b: ein erfindungsgemässes Vermessungsgerät, bei der Ausführung einer Scanfunktion bzw. einer Einzelpunktmessung.

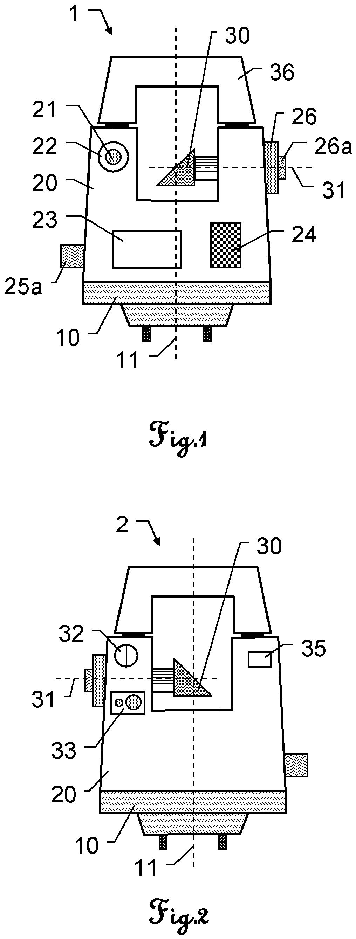

Die Figur 1 zeigt eine erste Ausführungsform eines erfindungsgemässen Vermessungsgeräts 1 in einer Rückansicht. Das Vermessungsgerät 1 gemäss Figur 1 weist eine eine Stehachse 11 definierende Basis 10 und einen Aufbau 20 auf, wobei der Aufbau 20 um die Stehachse 11 relativ zur Basis 10 schwenkbar ist. Am Aufbau 20 ist ein Okular 21 zur Ausgabe einer Bildinformation mit einem Drehknopf oder Geber 22 vorgesehen, wobei durch Betätigung des Drehknopfes 22 eine Fokussierung der ausgegebenen Bildinformation variierbar ist. Ausserdem sind ein Display 23 und ein Bedienfeld oder Eingabefeld 24 zur Steuerung des Vermessungsgeräts 1 am Aufbau 20 installiert. Mittels eines Verstelldrehknopfes 25a für einen Verstellmechanismus kann der Aufbau 20 relativ zur Basis 10 manuell um die Stehachse geschwenkt werden, wobei zusätzlich eine Motorisierung für ein derartiges Schwenken im Aufbau 20 vorgesehen ist und das Schwenken somit gesteuert erfolgen kann. Alternativ oder zusätzlich zur Ausrichtung des Aufbaus 20 mittels des Verstelldrehknopfes 25a kann dieser manuell durch Drehen grob ausgerichtet werden. In analoger Weise kann ein Strahlumlenkmittel 30 mittels eines zweiten Verstelldrehknopfes 26, welcher mit einem Grobtrieb zusammenwirkt, um eine Kippachse bzw. Horizontalachse 31 manuell rotiert werden, wobei auch hier im Aufbau 20 Motoren zur gesteuerten motorisierten Rotation der Stahlumlenkeinheit 30 vorgesehen sind. Ferner kann eine hochpräzise Ausrichtung der Stahlumlenkeinheit 30 mittels eines weiteren Feinverstelldrehknopfes 26a oder Steuertasters, welcher mit einem Feinverstellmechanismus verbunden ist, erfolgen. Bei einem Betätigen des Drehknopfes 26a wird die Strahlumlenkeinheit 30 mit einer bestimmten Drehübersetzung so mitgedreht, dass beispielsweise bei zehn oder zweihundert Umdrehungen des Drehknopfes 26a eine Umdrehung der Strahlumlenkeinheit 30 erfolgt. Mittels eines elektronischen Gebers kann das Übersetzungsverhältnis auch adaptiv ausgelegt sein, beispielsweise je langsamer eine Drehbewegung erfolgt umso grösser wird die Drehübersetzung. Durch die so bereitgestellte Ausrichtbarkeit der Strahlumlenkeinheit 30 kann ein Messlaserstrahl sowohl manuell als auch automatisch gesteuert (mittels der mit den jeweiligen Trieben verbundenen Motoren) auf ein Ziel ausgerichtet werden. Beispielsweise kann ein Benutzer dabei durch das Okular 21 blicken und ein eingeblendetes Fadenkreuz mit einem Messpunkt zur Deckung bringen.

Ein den Messpunkt aufweisendes Bild wird dabei beispielsweise über die Strahlumlenkeinheit 30 sowie ein Abbildungssystem auf eine Kamera gelenkt. Das Kamerabild wird nach Durchführung von Bildtransformationen (Rotation, Verzeichnung- und Koordinaten-Korrekturen) mit dem Fadenkreuz überlagert und beispielsweise auf einer elektooptischen Anzeige dargestellt, wobei das Bild vom Benutzer über das Okular 21 betrachtet werden kann. Alternativ dazu kann das Bild auf der Anzeige 23, insbesondere mit zusätzlichen Informationen überlagert, dargestellt werden. Das Bedienfeld 24 ermöglicht das Ändern von Einstellungen bzw. die Eingabe von zusätzlichen Daten.

Mittels der Strahlumlenkeinheit 30 wird zudem ein Sichtbereich für die Erfassung eines Bildes ausgerichtet. Der Sichtbereich ist dabei so relativ zum Messstrahl ausgerichtet, dass eine durch den Messstrahl definierte Messachse in diesem Sichtbereich liegt bzw. parallel oder koaxial zu einer Erfassungsrichtung für die Bilderfassung ausgerichtet ist. Ein so erfassbares Bild kann auf die Messkamera im Vermessungsgerät 1 abgebildet werden und beispielsweise auf dem Display 23 und/oder über einen Mikrodisplay mit Okular 21 bereitgestellt werden. Als einfachstes Ausführungsbeispiel kann ein durchgängiger Sichtkanal mit optischen Komponenten vom Okular 21 zur Stahlumlenkeinheit 30 vorgesehen sein. Das Display 23 kann in diesem Zusammenhang als berührungssensitives Display 23 ausgeführt sein, wobei eine Steuerung des Vermessungsgeräts 1 mittels eines Berührens und dadurch verbundenes Auslösen von Befehlen erfolgen kann.

Des Weiteren weist das Vermessungsgerät 1 einen Griff 36 auf, welcher modular vom Gerät 1 abnehmbar ist. Bei abgenommenem Griff 36 kann z.B. im Rahmen eines Scanvorgangs ein vergrösserter Scanbereich erfasst werden, wobei dann zusätzlich ein Bereich erfassbar ist, welcher zuvor durch den Griff 36 abgeschirmt war.

In Figur 2 ist die Vorderansicht eines erfindungsgemässen Vermessungsgeräts 2 gezeigt. Die Basis 10 definiert wiederum eine Stehachse 11 und der Aufbau 20 des Vermessungsgeräts 2 ist schwenkbar um die Stehachse 11 relativ zur Basis 10 angeordnet. Zudem ist eine Strahlumlenkeinheit 30, welche ein Spiegelelement zur Ablenkung des Messlaserstrahls und des Sichtfeldes zur Bilderfassung aufweist, rotierbar um eine Horizontalachse 31 relativ zum Aufbau 20 vorgesehen.

Das Vermessungsinstrument 2 ist mit einer zusätzlichen Übersichtskamera 35 ausgestattet, welche über einen vergleichsweise (im Vergleich zur Messkamera) grossen horizontalen Winkelbereich von z.B. 10-40° verfügt und somit zur Erfassung eines Übersichtsbildes genutzt werden kann. Da der Bildbereich in einer solchen Konfiguration in vertikaler Richtung nicht verändert werden kann, kann ein Objektiv der Übersichtskamera 35 ferner derart ausgeführt sein, dass es zusätzlich einen grossen vertikalen Winkelbereich abbilden kann. Alternativ dazu können anstelle einer einzigen Übersichtskamera 35 mehrere Kameramodule mit unterschiedlicher vertikaler Ausrichtung übereinander angeordnet sein.

Hinsichtlich des Absteckens von bekannten Absteckpunkten im Gelände kann das Einfluchten eines Messinstruments auf eine Ziellinie einen zeitaufwendigen (weil iterativen) Vorgang darstellen. Als Ziellinie wird dabei die Richtung des Messstrahls oder eines Laserpointers bezeichnet. Zum leichteren Auffinden der Ziellinie ist das erfindungsgemässe Vermessungsgerät 2 mit einem EGL-Modul 32 (Emitting Guide Light) ausgestattet. Dieses Modul 32 visualisiert einerseits die Ziellinie anderseits einen die Ziellinie symmetrisch einschliessenden Raumwinkelbereich. Beispielsweise können zwei Lichtkegel, welche die Ziellinie z.B. in einem Winkelbereich von typischerweise +/-5° einschliessen, die Raumwinkelbereiche links und rechts markieren. Im Falle eines Laserpointers als Zielliniengenerator kann die Ziellinie auch mit einem einzigen Lichtkegel räumlich markiert werden, wobei in diesem Fall der die Zielachse symmetrisch umschliessende Lichtkegel vorzugsweise nicht mehr als +/-2° aufgeweitet ist. Die prinzipielle Funktionsweise eines EGL-Moduls 32 ist bereits im Zusammenhang mit modernen Totalstationen des Standes der Technik bekannt.

Ausserdem weist das Vermessungsgerät 2 eine erste Ausführungsform eines Zielsuchmoduls 33 (Powersearch) auf, wobei dieses Modul 33 fix am Aufbau 20 platziert und somit um die Stehachse 11 verschwenkbar ist. Das Modul 33 besteht aus einer Sende- und einer Empfangseinrichtung, welche zueinander biaxial angeordnet sind und zwei nebeneinander platzierte vertikale Lichtfächer aufspannen. Die Sendeeinrichtung ist beispielsweise impulsmoduliert. Sie sendet ein Signal aus, welches von einem kooperativen Ziel reflektiert, von der Empfangseinrichtung empfangen und in Echtzeit nach Amplitude und Laufzeit ausgewertet werden kann. So werden beispielsweise Entfernung und Reflektionsgrad des Zielobjekts ermittelt. Bei einer alternativen Ausführungsform des Moduls 33 können Sendeund Empfangsstrahl über eine rückseitige Fläche der Strahlumlenkeinheit 30 in jede beliebige vertikale Richtung verschwenkt werden, dadurch können Zielobjekte auch bei grossen Elevationswinkeln gefunden werden.

Eine weitere Ausführungsform für eine Vorrichtung mit Zielsuchfunktion kann das Scanmodul unter Verwendung des Entfernungsmessers 51 selbst bilden. Ein Auffinden von markierten Zielpunkten kann mittels eines Übersichtsscans erfolgen, wobei in kurzer Zeit mit hoher Messrate die gesamte Umgebung abgetastet und die Reflexionsgrade der aufgefundenen Zielmarkierungen ermittelt werden können.

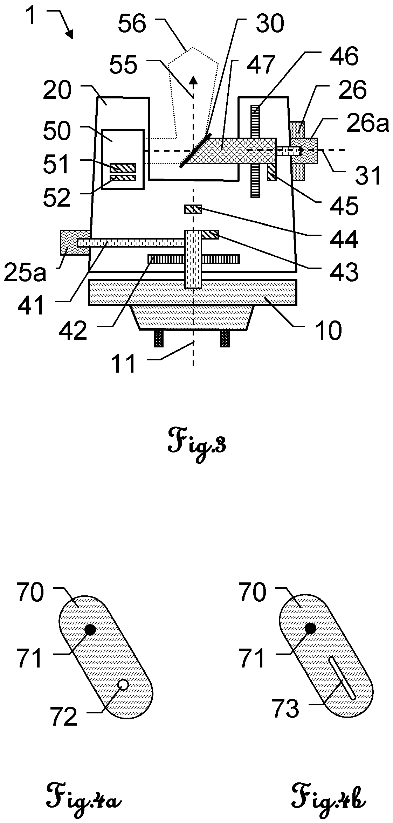

Figur 3 zeigt eine weitere Ausführungsform eines erfindungsgemässen Vermessungsgeräts 1. Wiederum weist das Vermessungsgerät 1 eine Basis 10, einen Aufbau 20 und die jeweiligen Drehachsen, d.h. eine Stehachse 11, um die der Aufbau 20 schwenkbar ist, und eine Horizontalachse 31, um die die Strahlumlenkeinheit 30 rotierbar ist, auf. Ferner ist eine mit dem manuell bedienbaren Verstelldrehknopf 25a verbundene Welle 41 vorgesehen, vermittels derer das Schwenken des Aufbaus 20 relativ zur Basis 10 erfolgt. Ausserdem wirkt ein erster Motor 43 mit der
Schwenkvorrichtung derart zusammen, dass das Schwenken alternativ auch gesteuert mittels des Motors erfolgen kann. Zudem ist an der Schwenkvorrichtung ein Winkelsensor 42, z.B. ein Winkelencoder mit Mikroradiant-Auflösung, zur Messung einer relativen Stellung des Aufbaus 20 zur Basis 10 angeordnet. Mittels eines zweiten Winkelsensors 46 kann zusätzlich eine relative Stellung der
Strahlumlenkeinheit 30 bzw. einer mechanischen Achse 47 zum Aufbau 20 festgestellt und insbesondere fortlaufend gemessen werden. Ein zweiter Motor 45 ist hierbei so an der mechanischen Achse 47 angeordnet, dass die Strahlumlenkeinheit 30, die mit der mechanischen Achse 47 verbunden ist, mittels des Motors 45 rotierbar ist. Des

Weiteren sind wiederum der Grobverstelldrehknopf 26 zur Grobausrichtung, welcher einen Grobtrieb steuerbar macht, und zur hochpräzisen Ausrichtung der Stahlumlenkeinheit 30 eine weiterer Feinverstelldrehknopf 26a, welcher mit einem Feintrieb verbunden ist, vorgesehen. Die durch den Feinverstelldrehknopf 26a erzeugte Führungsgrösse wird beispielsweise über eine elektronische Feintriebeinheit verarbeit, um den zweiten Motor 45 in sehr feinen Winkelschritten zu verstellen, und damit den Messstrahl in Subwinkelsekunden auf das Ziel auszurichten.

Der Aufbau 20 weist ferner ein Abbildungssystem 50 mit einem Entfernungsmesser bzw. Distanzmessmodul 51 und einer Kamera 52 auf, wobei dem Distanzmessmodul 51 zusätzlich eine Strahlquelle zur vorzugsweise impulsmodulierten Emission der Messstrahlung 55 zugeordnet ist. Die Messstrahlung 55 wird mittels des Abbildungssystems 50 in Richtung der Strahlumlenkeinheit 30 emittiert und an dieser in einem definierten Winkel abgelenkt bzw. reflektiert. Nachdem die Strahlung 55 an einem Ziel gestreut oder reflektiert und zum Vermessungsgerät 1 rückgestrahlt wurde, wird die Strahlung 55 wieder mittels der
Strahlumlenkeinheit 30 über das Abbildungssystem 50 auf das Distanzmessmodul 51 geleitet. Mittels des
Distanzmessmoduls 51 kann eine polare Entfernung zum Ziel bestimmt werden. Mit der Strahlumlenkeinheit 30 wird ausserdem ein Sichtfeld 56 ausgerichtet bzw. variiert. Das Sichtfeld 56 wird dabei zumindest definiert durch die optischen Eigenschaften des Abbildungssystem 50, d.h. beispielsweise der Kamera 52 und weiterer optischer Komponenten zur Führung der mit der Kamera 52 zu erfassbaren Strahlung, und durch die optischen Eigenschaften der Strahlumlenkeinheit 30.

Mit einer derartigen Anordnung kann eine durch die Messstrahlung 55 definierte Messrichtung mit einem mit der Kamera 52 erfassbaren Bild erfasst werden. Auf Basis dieses Erfassens kann weiters eine exakte Ausrichtung der Messstrahlung 55 z.B. auf ein Ziel durchgeführt werden. So kann beispielsweise einem Benutzer fortlaufend eine optische Ausgabe bereitgestellt werden, wobei sowohl ein Bild korrespondierend zur aktuellen Sichtfeldausrichtung und eine Markierung, die die Messrichtung bzw. die Messachse anzeigt, ausgegeben werden. Auf Grundlage dieser Ausgabe kann so eine Ausrichtung, z.B. durch InÜbereinstimmung-Bringen der angezeigten Messrichtung mit einem gewünschten Ziel im Bild, der Messstrahlung 55 erfolgen.

Ein Neigungssensor 44 ist zudem im Aufbau 20 vorgesehen um die Schiefstellung des Vermessungsgeräts 1 zum Gravitationsvektor zu erfassen und gegebenenfalls eine Korrektur bzw. Kompensation von Messwerten auf Grundlage der gemessenen Neigung zu ermöglichen.

Mit einem derartigen erfindungsgemässen Vermessungsgerät 1 kann im Rahmen eines Scanvorganges in analoger Weise zu bekannten Laserscannern ein horizontaler und vertikaler Winkelbereich sowie eine Punktauflösung definiert werden. Während einer darauf basierenden fortlaufenden Entfernungsmessung mit dem Distanzmessmodul 51 rotiert die Strahlumlenkeinheit 30 angetrieben durch den Motor 45 mit hoher Geschwindigkeit um die horizontale Achse 31 sowie der Aufbau 20 angetrieben durch den Motor 43 mit geringerer Geschwindigkeit um die vertikale Achse 11, sodass der modulierte Laserstrahl 55 den gesamten zu vermessenden Winkelbereich überstreicht. Gleichzeitig mit der Entfernungsmessung wird mit den Winkelsensoren 42,46 die jeweilige Ausrichtung des Messstrahls 55 erfasst. Aus einer Verknüpfung dieser Werte können dann die Koordinaten der so erfassten Messpunkte berechnet werden.

Durch geeignete Synchronisation der Winkelsensoren können gleichzeitig zwei Winkel und wenigstens eine Entfernungsmessung zu einer polaren 3D-Koordinate kombiniert werden. Ein bekanntes Trigger- und Synchronisationskonzepte basiert auf dem Elevationswinkelsensor als Triggerquelle. Dieses Verfahren hat den Vorteil, dass die Winkelabstände zwischen den Messpunkten mit hoher Präzision gleich sind. Bei asynchronen Sensoren werden die benachbarten Messwerte vorzugsweise in Echtzeit ("realtime") interpoliert. Dabei kann eine Entfernungsmessung gleichzeitig mit je einer Winkelmessung erfolgen oder mit einer geringeren Messrate durchgeführt werden. In letzterem Fall wird die einer Winkelmessung zuzuordnende Distanz auf Basis der gemessenen Distanzen interpoliert.

Weiters kann eine Einzelpunktscanfunktionalität ausgeführt werden, wobei das Bestimmen eines Einzelpunkt basierend auf aufgenommenen Scandaten erfolgt. Dazu wird zuerst ein Messpunkt grob angezielt. Das Vermessungsgerät 1 startet nach der Auslösung der Einzelpunktscanfunktionalität einen Scanvorgang und erfasst eine Punktwolke in einer vordefinierten Umgebung um die angezielte Richtung bzw. um den grob angezielten Messpunkt. Die Punktwolke wird nach der Aufnahme mit entsprechenden Algorithmen hinsichtlich signifikanter Merkmale (z.B. Kanten, Ecken) analysiert und daraus die Koordinaten des Messpunktes abgeleitet. Optional können zur Bestimmung des Messpunkts auch Bilddaten, welche mit der Messkamera des Vermessungsgeräts 1 erfasst wurden, verwendet werden. Eine derartige Bestimmungsmethode von Zielpunkten ist beispielsweise in der europäischen Patentanmeldung Nr. 10162447.6 beschrieben.

### Die Figuren 4a und 4b zeigen jeweils ein

Strahlvariationsmodul 70 für ein erfindungsgemässes Vermessungsgerät.

Laserscanner sind heute mit empfindlichen Distanzmessern ausgerüstet, welche auf natürliche Ziele optimiert sind und dadurch mit hohen Messraten von bis zu mehreren Megapunkten pro Sekunde diffus reflektierende Oberflächen abtasten können. Bei der Vermessung mit Totalstationen hingegen werden meist reflektorunterstützte Zielmarken verwendet, um den Zielpunkt hochgenau zu markieren. Solche Ziele können mit herkömmlichen Laserscannern nicht vermessen werden, da die Signale aufgrund deren hohen Sensitivität und dem hohen Reflektionsgrad zu einer Übersteuerung führen würden. Zudem können mit kollimierten Messstrahlen systematische Distanzabweichungen induziert durch beugungsbedingte Strahlasymmetrien oder durch Zeitunterschiede des Modulationsmusters im Profil der Messstrahlung zusammen mit kleinsten Fehlzielungen zum Reflektormittelpunkt auftreten.

Um mit einem erfindungsgemässen Vermessungsgerät sowohl im Rahmen der Scanfunktionalität (Vermessungsgerät als Laserscanner) auf diffus reflektierende, natürliche Ziele, als auch im Rahmen der Einzelpunktmessfunktionalität (Vermessungsgerät als Totalstation oder Theodolit) reflektorunterstützte (oder natürliche) Zielobjekte messen zu können, kann in den Strahlengang des Laserstrahls ein Strahlvariationsmodul 70, welches z.B. als Strahlaufweitungsmodul und/oder ein Strahlabschwächungsmodul ausgeführt ist, integriert sein. Auch mittels einer Totalstation bzw. im Rahmen der Einzelpunktmessfunktionalität können natürliche Ziele vermessen werden. Das Strahlaufweitungsmodul erhöht die Divergenz des Distanzmessstrahls, weitet diesen somit auf und schwächt durch den vergrösserten Lichtfächer gleichzeitig das Messsignal ab. Ein divergenter Laserstrahl hat den Vorteil, dass für die Distanzmessung das reflektierende Zielobjekt nicht mehr genau angezielt werden muss. Dies kann beispielsweise hinsichtlich einer Punktabsteckung vorteilhaft sein, da die Einfluchtung auf eine abzusteckende Richtung deutlich schneller erfolgen kann.

Ein divergenter Laserstrahl hat hinsichtlich der automatischen Zielverfolgung bewegter Ziele, beispielsweise basierend auf der ATR-Funktion, den weiteren Vorteil, dass sich das Zielobjekt nicht so schnell aus dem Sendebereich des Distanzmessstrahl heraus bewegt und damit eine repetitive Distanzmessung möglich ist. Damit kann die Bahnverfolgung auch bei dynamisch bedingter Fehlzielung oder ungenauer Ausrichtung auf bewegte Zielobjekte gewährleistet werden.

Das Strahlvariationsmodul 70 kann als um eine Drehachse 71 einschwenkbare Lochblende 72 mit einem zusätzlichen Abschwächfilter, beispielsweise einem photographischen Film, realisiert sein und kann dadurch eine optimal angepasste Abschwächung des Distanzmessstrahls erzeugen (Fig. 4a). Die einschwenkbare Lochblende 72 kann dabei mehrere Bereiche aufweisen, wobei jeder Bereich zu einer unterschiedlichen Abschwächung führt und einem entsprechenden Zieltyp zugeordnet werden kann. Dadurch kann ein Pegel eines Empfangssignals durch das Einschwenken eines Filters in einen bestimmten Bereich auf das entsprechende Zielobjekt angepasst werden. Der Abschwächgrad kann dabei bis zu einem Faktor 100'000 betragen. Alternativ dazu kann das Strahlvariationsmodul 70 als Verlaufsfilterrad realisiert werden.

Laserdioden, die in einem erfindungsgemässen Vermessungsgerät zum Einsatz kommen können, haben typischerweise eine elliptische oder streifenförmige Emissionsfläche, was bei der modulierten Strahlungsemission zu relativ grossen Zeitunterschieden längs der Dimension der Grossachse führen kann und somit präzise Distanzmessungen im Submillimeter-Bereich erschwert bzw. verhindert. Durch den Einsatz einer Schlitzblende 73 in einem Strahlvariationsmodul 70 (Fig. 4b) anstelle der Lochblende 72 können z.B. die am Rand des Strahlenbündels verzögerten Lichtimpulsanteile eliminiert werden. Auf diese Weise kann ein räumlich flacherer, auf Picosekunden genauer Lichtimpuls erreicht werden und damit eine genaue Distanzmessung auf Reflektorziele im Rahmen der Einzelpunktmessfunktionalität (Vermessungsgerät eingesetzt als Totalstation oder Theodolit) erfolgen. Alternativ oder in Kombination zu einem emissionsseitigen Abschwächer kann im Empfangskanal des Distanzmessers ein optischer Abschwächer platziert sein. Neuste variable optische Abschwächer (VOA), insbesondere faseroptische VOA, sind sehr schnell und ermöglichen dadurch auch während dem Scanvorgang die Signalpegel des Distanzmessers von Messpunkt zu Messpunkt einzustellen.

Je nachdem, ob Einzelpunkte aufgenommen werden (Einzelpunktmessmodus), oder ein Scanvorgang durchgeführt wird (Scanfunktionalität), kann eine Einstellung des Distanzmessmoduls entsprechend variiert werden. Für einen Scanvorgang kann die Entfernungsmessungen in hohen Messraten durchgeführt werden. Für die Einzelpunktmessung können mehrere Einzelmessungen (Millionen von Einzelmessungen) gemittelt werden, was die Messrate mindert, jedoch die Genauigkeit der Entfernungsmessung erhöht. Sowohl der Scanmodus als auch der Einzelmessmodus beinhalten diverse, für den Vermessungsingenieur bekannte Unterprogramme mit charakteristischen Eigenschaften, beispielsweise unter einer Einzelpunktmessung sind neben "Standard" auch die Messmodi "Precison, Fast, Repetitive, Tracking, oder Lock-in" enthalten.

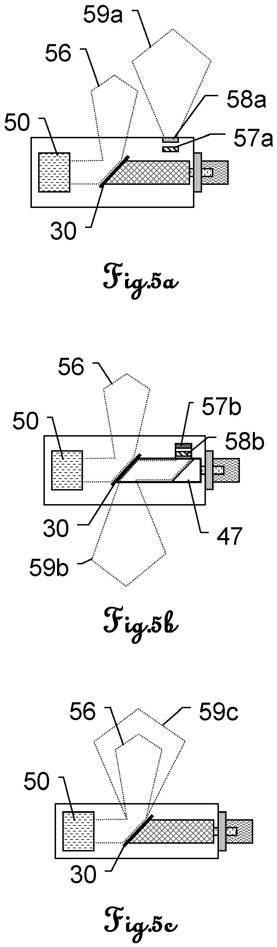

Die Figuren 5a,5b,5c zeigen jeweils eine Ausführungsform für die Anordnung von Messkamera (in dem
Abbildungssystem 50) und Übersichtskamera 57a-b bzw. für die Ausrichtung der jeweiligen Kamerasichtfelder 56,59a-c für ein erfindungsgemässes Vermessungsgerät.

Das Sichtfeld 56 der Messkamera, das z.B. auf einen horizontalen Winkelbereich von ungefähr 1° ausgelegt sein kann, wird über die Strahlumlenkeinheit 30 und das Abbildungssystem 50 auf den im Abbildungssystem 50 verbauten Kamerasensor gelenkt. Zur Darstellung des Bildes auf einer elektro-optischen Anzeige, kann eine Bildrotation, die aus der Drehung der
Strahlumlenkeinheit 30 resultiert, rechnerisch korrigiert werden. Gleichzeitig können zusätzlich auftretende Abbildungsfehler, beispielsweise die Verzeichnung des Abbildungssystems 50, ebenfalls rechnerisch korrigiert werden.

Neben der Messkamera, kann ein erfindungsgemässe Vermessungsinstrument gemäss Figur 5a mit einer zusätzlichen Übersichtskamera, bestehend aus einem Kamerasensor 57a und einem Objektiv 58a ausgestattet sein, wobei das Objektiv 58a über einen horizontalen Winkelbereich von 10-40° verfügen und somit zur Erfassung eines Übersichtsbildes genutzt werden kann. Der Sichtbereich 59a in dieser Konfiguration kann in vertikaler Richtung nicht verändert werden. Das Objektiv kann deshalb derart ausführt sein, dass es zusätzlich einen grossen vertikalen Winkelbereich abbilden kann. Alternativ dazu können anstelle einer einzigen Übersichtskamera mehrere Kameramodule mit unterschiedlicher vertikaler Ausrichtung übereinander angeordnet sein. Die Ausrichtung der Kamerasensor-Objektiv-Anordnung kann in der gezeigten Ausführung durch ein Schwenken des Aufbaus des Vermessungsgeräts erfolgen.

Eine weitere erfindungsgemässe Ausführungsform gemäss Figur 5b ergibt sich, bei einer Ausführung der
horizontalen, mechanischen Achse 47 als Hohlachse. Dadurch kann der Sichtbereich 59b eines Kameramoduls bestehend aus einem Kamerasensor 57b und einem optischen Element 58b durch die Hohlachse geführt und auf die Rückseite der Strahlumlenkeinheit 30 gelenkt werden. Durch Drehen der Strahlumlenkeinheit 30 kann hierbei das Sichtfeld 59b auch in vertikaler Richtung verändert werden.

In einer weiteren Ausführungsform gemäss Figur 5c kann das Abbildungssystem 50 über einen Mechanismus ähnlich einem Zoomobjektiv verfügen, welches das Umschalten des Winkelbereichs von 1° auf beispielsweise 15° ermöglicht. Durch das Umschalten kann das enge Sichtfeld 56 auf das Bildfeld für ein Übersichtsbild 59c umgestellt werden (und umgekehrt). Dieser Zoom-Mechanismus kann schrittweise auf die Einstellung diese zwei Winkelbereiche beispielsweise auf 1° und 15° ausgelegt sein oder stufenlos einstellbar sein.

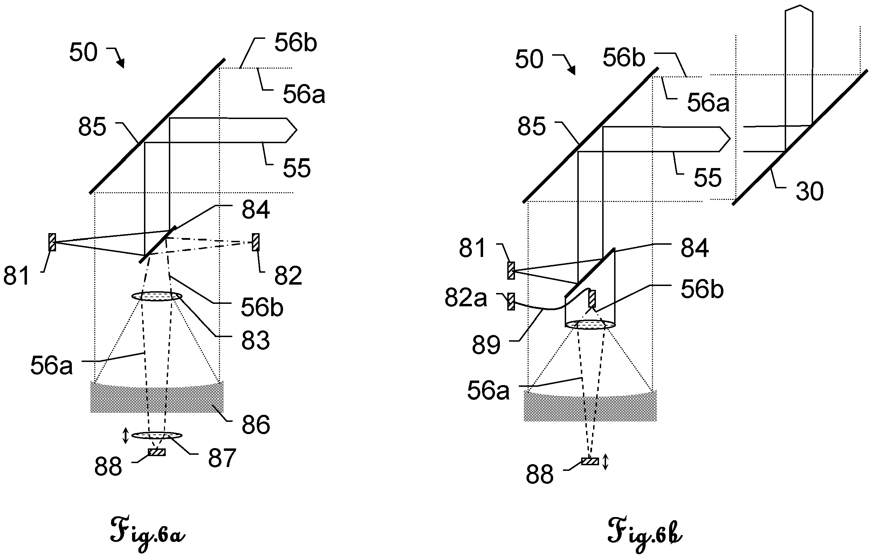

Die Figuren 6a-c zeigen jeweils eine Ausführungsform eines Abbildungssystems 50 für ein erfindungsgemässes Vermessungsgerät.

In Figur 6a ist eine erste Ausführungsform des Abbildungssystems 50 dargestellt, welche einem
katadioptrischen Aufbau entspricht. Eine
Lasersendeeinheit 81, z.B. eine Laserdiode, sendet einen Messstrahl 55 auf einen ersten Umlenkspiegel 84. Von diesem kann der Messstrahl 55 beispielsweise direkt auf eine Strahlumlenkeinheit (hier nicht dargestellt), z.B. einen rotierbaren Spiegel, oder auf einen zweiten Umlenkspiegel 85 treffen und von dort auf die Strahlumlenkeinheit gelenkt werden.

Nach der Reflexion des emittierten Strahls 55 am Objekt bzw. an einem Ziel wird der Strahl 56b mittels der rotierbaren Stahlumlenkeinheit und gegebenenfalls über den zweiten Umlenkspiegel 85 auf einen Primärspiegel 86 gelenkt, an diesem reflektiert, auf einen beschichteten, spektral selektiven Sekundärspiegel 83 transmittiert und von dort auf den ersten Umlenkspiegel 84 und weiter auf eine Laserempfangseinheit 82 gelenkt.

Das Sichtfeld 56a bzw. die Bildinformation für die Kamera wird ebenfalls über die Strahlumlenkeinheit und gegebenenfalls über den zweiten Umlenkspiegel 85 auf den Primärspiegel 86 gelenkt, an diesem reflektiert, auf den beschichteten Sekundärspiegel 83 gerichtet, an diesem reflektiert und auf eine Fokussierlinse 87 und weiter auf einen photosensitiven Flächensensor 88 gelenkt. Die Fokussierlinse 87 ist dabei derart bewegbar, dass ein scharfes Abbild auf den photosensitiven Flächensensor 88 abgebildet werden kann. Somit kann mittels des Flächensensors 88 ein Bild derart erfasst werden, dass das Ziel, auf das der Laserstrahl 55 gerichtet ist, im Bild abgebildet ist. In einer weiteren Ausführungsform kann das Modul 87 mit optischen Elementen versehen sein, um sowohl die Fokussierung auf der Bildebene als auch den Abbildungsmassstab mittels eines Zoommechanismus einzustellen.

Eine weitere Ausführungsform des Abbildungssystems 50 ist in Figur 6b dargestellt. Der Unterschied zur Ausführungsform gemäss Figur 6a besteht darin, dass der am Objekt reflektierte Laserstrahl 56b nach Reflexion an dem Sekundärspiegel 83 nicht wieder auf den ersten Umlenkspiegel 84 trifft, sondern in eine Faserferrule eingekoppelt und über eine Faser 89 (optischer Lichtleiter) zur Laserempfangseinheit 82a geführt wird. Zudem wird in diesem Aufbau auf die Fokussierlinse verzichtet und stattdessen der Sensor 88 beweglich ausgeführt, sodass diese in Abhängigkeit der Objektdistanz derart positioniert werden kann, dass eine scharfe Abbildung des Objekts erzeugt werden kann.

Zudem ist die Strahlumlenkeinheit 30 dargestellt, welche eine rotierbare Umlenkung der gesendeten Messstrahlung 55 und der empfangenen Messstrahlung 56b bzw. des Sichtbereichs 56a des photosensitiven Flächensensors 88 (nach Ablenkung durch den zweiten Umlenkspiegel 85) bereitstellt.

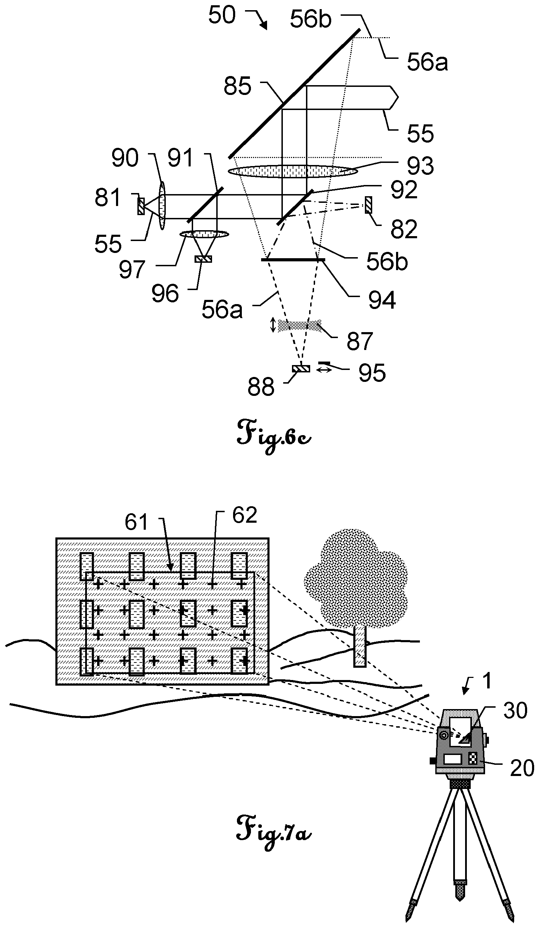

Gemäss einer weiteren Ausführungsform (Figur 6c) kann das Abbildungssystem 50 auch entsprechend einem refraktiven Aufbau ausgeführt sein. Die Lasersendeeinheit 81 eines Distanzmessmoduls emittiert einen Laserstrahl 55, welcher durch eine Sammellinse 90 leicht aufgeweitet durch einen ersten Umlenkspiegel 91 (dichroitischer Strahlteiler) geführt wird und auf einen zweiten Umlenkspiegel 92 trifft. Von diesem wird der Laserstrahl in Richtung des Hauptobjektivs 93 reflektiert und auf einen dritten Umlenkspiegel 85 und von dort z.B. auf die Strahlumlenkeinheit (hier nicht dargestellt) gelenkt.

Nach der Reflexion des Strahls 55 am Objekt wird dieser Strahl 56b durch die rotierbare Strahlumlenkeinheit und über den dritten Umlenkspiegel 85 durch das Hauptobjektiv 93 auf einen weiteren, spektral selektiven Spiegel 94 gelenkt. Von diesem wird der Strahl 56b auf den zweiten Umlenkspiegel 92 reflektiert und von dort weiter auf die Laserempfangseinheit 82 gelenkt.

Das Bildfeld 56a des Sensors 88 wird ebenfalls über die Strahlumlenkeinheit über den dritten Umlenkspiegel 85 durch das Hauptobjektiv 93, den Spiegel 94, eine
Fokussierlinse 87 und gegebenenfalls einen einschwenkbaren Infrarotfilter 95 auf den Flächensensor 88 geführt.

Zusätzlich weist das Abbildungssystem 50 eine zweite Lasersendeeinheit 96 auf, die im Rahmen einer ATR-Funktionalität eingesetzt werden kann. Diese zweite Lasersendeeinheit 96 emittiert einen ATR-Laserstrahl, welcher durch eine Sammellinse 97 leicht aufgeweitet auf ersten Umlenkspiegel 91 trifft und von dort auf einen zweiten Umlenkspiegel 92 gelenkt wird. Von diesem wird der ATR-Laserstrahl in Richtung des Hauptobjektivs 93 reflektiert und entweder direkt auf die Strahlumlenkeinheit (nicht dargestellt) oder auf den dritten Umlenkspiegel 85 und von dort auf die rotierbaren Strahlumlenkeinheit gelenkt.

Nach der Reflexion des ATR-Strahls am Objekt nimmt dieser den selben Verlauf durch das Abbildungssystem 50 wie das Kamerabild, d.h. er wird über den dritten Umlenkspiegel 85 durch das Hauptobjektiv 93, den Spiegel 94, die Fokussierlinse 87 (gegebenenfalls durch den eingeschwenkten Infrarotfilter 95) auf einen photosensitiven Flächensensor 88 geführt.

Mittels des photosensitiven Flächensensors 88 und einer positionsbestimmenden Bildauswerte-Software kann die Auftreffposition des von einem Zielobjekt reflektierten ATR-Laserstrahls detektiert und damit eine Ablage dieser Position relativ zu einer Referenzposition bestimmt werden. Für eine derartige positionssensitive Bestimmung kann alternativ ein zusätzlicher Detektor z.B. im Abbildungssystem 50 vorgesehen sein, wobei eine Auskopplung der ATR-Strahlung aus dem gemeinsamen Strahlengang, z.B. mittels eines beschichteten Spiegels oder eines Strahlteilers, erfolgen kann. Auf Basis der so bestimmbaren Strahlablage kann der Messstrahl, insbesondere automatisch gesteuert vermittels der Motoren zur Ausrichtung des Aufbaus und der Strahlumlenkeinheit, fortlaufend einem Ziel (Reflektor) nachgeführt werden und so an den Reflektor angekoppelt werden.

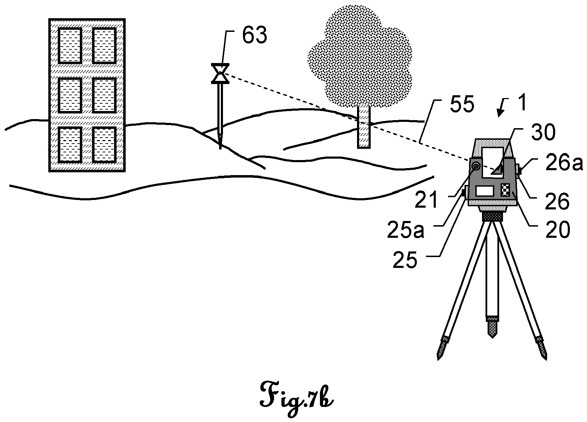

Die Figuren 7a und 7b zeigen ein erfindungsgemässes Vermessungsgerät 1, wobei eine Scanfunktion bzw. eine Einzelpunktmessung mit dem Vermessungsgerät 1 ausgeführt wird.

Bei der Ausführung der Scanfunktionalität (Figur 7a) wird in analoger Weise zu bekannten Laserscannern ein horizontaler und vertikaler Winkelbereich 61, welcher abgescannt werden soll, sowie eine Punktauflösung der zu erfassenden Scanpunkte 62 definiert. Das Vermessungsgerät 1 ist für die Entfernungsmessung mit einer Entfernungsmessfunktionalität ausgestattet, welche über eine Lasersende und -empfangseinheit verfügt. Der Messlaserstrahl des Vermessungsgeräts 1 wird mittels einer Rotation der Strahlumlenkeinheit 30 und eines Schwenkens des Aufbaus 20 derart geführt, dass der definierte Winkelbereich 61 abgefahren wird. Zu jedem Scanpunkt 62 wird dabei eine Entfernung und je ein Horizontal- und Vertikalwinkel bestimmt. Aus diesen Werten kann in Folge eine den Scanbereich 61 repräsentierende Punktwolke abgeleitet werden. Zusätzlich kann der Winkelbereich 61 mit der Messkamera graphisch erfasst werden.

Figur 7b zeigt die Ausführung eines Einzelpunktmessmodus mit dem erfindungsgemässen Vermessungsgerät 1, wie dieser in analoger Weise mit Totalstationen ausgeführt werden kann. Im Einzelpunktmessmodus wird das Vermessungsgerät 1 genau auf den Messpunkt ausgerichtet. Der Messpunkt ist hier als Reflektor 63 definiert. Eine Ausrichtung des Messstrahls 55 kann durch Drehen des Aufbaus 20 um eine Stehachse sowie durch das Drehen des Spiegels 30 um eine Horizontalachse erfolgen. Das Drehen kann dabei jeweils manuell mittels einer Betätigung eines

Grobverstelldrehknopfes 25,26 vorgenommen werden, wobei beispielsweise die Rotation des Drehknopfs 26 und des Spiegels 30 in einem Verhältnis 1:10 erfolgt. Die hochpräzise Ausrichtung kann durch die Betätigung von jeweiligen Feinverstelldrehknöpfen oder Tasten 25a,26a, welche mit jeweiligen Feintrieben zusammenwirken, erfolgen. Dabei kann der Benutzer durch das Okular 21 blicken und ein Fadenkreuz mit dem Zentrum des Reflektors 63 zur Deckung bringen. Das Bild des Reflektors 63 wird dabei beispielsweise über den drehbaren Spiegel 30 auf eine Kamera gelenkt. Das Kamerabild kann nach Durchführung von Bildtransformationen (Rotation, Korrekturen) mit dem Fadenkreuz überlagert und beispielsweise auf einer elektooptischen Anzeige dargestellt, wo es vom Benutzer über das Okular 21 betrachtet werden kann. Alternativ dazu kann das Bild auf einer Anzeige des Vermessungsgeräts 1 oder des zur Fernsteuerung verwendeten Peripheriegeräts - wie z.B. des Datenloggers - dargestellt werden.

Das Abbildungssystem weist dabei die Funktionalität eines Anzielfernrohrs, welche das stufenlose Fokussieren sowohl auf Objekte im Nahbereich, d.h. in einer Distanz ab 1m, als auch in grossen Entfernungen bis zu mehreren Kilometern erlaubt. Durch diese Funktionalität wird dem Benutzer das Scharfstellen und somit das genaue Anzielen von Objekten unterschiedlicher Entfernungen ermöglicht.

Die Fokusposition kann durch Drehen an einem Drehknopf oder durch das Betätigen von zwei Druckknöpfen "vor" und "zurück" verstellt werden. Neben der manuellen Fokussierung kann das Vermessungsgerät auch über die Funktionalität eines Autofokus verfügen.

Das Entfernungsmessmodul kann dabei derart konzipiert sein, dass es eine Entfernungsmessfunktionalität sowohl für die Scanmodi als auch für die Einzelpunktmessmodi bereitstellt. In diesem Zusammenhang kann im Einzelpunktmessmodus die Bestimmung der Entfernung zum Reflektor 63 (Zielpunkt) in einem ersten Entfernungsmessmodus erfolgen, wobei eine bestimmte Anzahl von Entfernungsmesswerten für den Reflektor 63 bestimmt und gemittelt wird. Durch die Kumulation von Messwerten in einer bestimmten Ausrichtung des Messstrahls 55 können die kumulierten Werte gemittelt und daraus ein Entfernungswert bestimmt werden.

Zudem kann im Rahmen der Scanfunktionalität die Bestimmung der Entfernung zu den Scanpunkten 62 in einem zweiten Entfernungsmessmodus erfolgen, wobei eine im Vergleich zu dem ersten Entfernungsmessmodus geringere Anzahl von Entfernungsmesswerten, insbesondere ein einziger Entfernungsmesswert, für jeweils einen der Scanpunkte 62 bestimmt und gegebenenfalls gemittelt wird. Dadurch wird ein Abscannen einer Umgebung mit einer geringen Messgenauigkeit aber einer grösseren Menge an erfassten Punkten ermöglicht.

Das Entfernungsmessmodul emittiert einen Messstrahl 55, der über das Abbildungssystem und den Spiegel 30 auf den Reflektor 63 ausgerichtet werden kann, an diesem reflektiert wird, und über den Spiegel 30 sowie das Abbildungssystem wieder auf die Laserempfangseinheit trifft. Auf Basis des Sendens und Empfangens des Laserstrahls 55 kann die Entfernung vom Vermessungsgerät 1 zum Messpunkt 63 ermittelt werden. Aus der Entfernung können gemeinsam mit der Richtung des Laserstrahls 55 oder einer kameragebundenen Ziellinie, welche durch die Ausrichtung des Aufbaus 20 und des Spiegels 30 definiert ist und durch Winkelsensoren gemessen werden kann, die Koordinaten des Messpunkts 63 abgeleitet werden. Die kameragebundene Ziellinie kann als Ersatz für die visuelle Ziellinie einer klassischen Totalstation interpretiert werden.

Zusätzlich ist das Vermessungsgerät mit Motoren ausgestattet, welche eine Drehung des Aufbaus 20 sowie des Spiegels 30 bewirken können und somit eine automatische Ausrichtung in eine vorgegebene Richtung ermöglichen.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Vermessen von Oberflächen bzw. Objekten und mit geodätischen Vermessungsgeräten des Stands der Technik kombiniert werden.

## Patentansprüche

1. Vermessungsgerät (1,2) mit
• einer Strahlquelle (81) zur Erzeugung von Messstrahlung (55),
• einer eine Stehachse (11) definierenden Basis (10),
• einem um die Stehachse (11) relativ zur Basis (10) schwenkbaren Aufbau (20) mit einer Eintrittsfläche und einer Austrittsfläche, insbesondere wobei die Eintrittsfläche und die Austrittsfläche identisch sind,
• einer Strahlumlenkeinheit (30) zur Ausrichtungsvariation einer durch eine Emissionsrichtung der Messstrahlung (55) definierten Messachse, wobei die Strahlumlenkeinheit (30)
□ um eine Horizontalachse (31) relativ zum Aufbau (20) rotierbar ist, und
□ derart relativ zum Aufbau (20) angeordnet ist, dass
· aus dem Austrittsfenster austretende Messstrahlung (55) auf die Strahlumlenkeinheit (30) trifft und vermittels dieser zu einem Objekt lenkbar ist und
· vom Objekt reflektierte, auf die Strahlumlenkeinheit (30) treffende Messstrahlung (56b) vermittels dieser auf das Eintrittsfenster gerichtet wird,
• Entfernungsmessfunktionalität zur Entfernungsmessung zu dem Objekt vermittels der Messstrahlung (55),
• Winkelmessfunktionalität zur Bestimmung einer Ausrichtung der Messachse relativ zur Basis (10),
• einer Steuerungs- und Verarbeitungseinheit zur Datenverarbeitung und zur Steuerung des Vermessungsgeräts, und
• einer Scanfunktionalität, wobei bei Ausführung der Scanfunktionalität automatisch gesteuert durch die Steuerungs- und Verarbeitungseinheit ein Scannen erfolgt mit
□ einer Rotation der Strahlumlenkeinheit (30) um die Horizontalachse (31) und einem Schwenken des Aufbaus (20) um die Stehachse (11), insbesondere gleichzeitig,
□ einem Bestimmen der jeweiligen Entfernung und der jeweiligen Ausrichtung der Messstrahlung (55) für innerhalb eines bestimmten Scanbereichs (61) liegende Scanpunkte (62), insbesondere in einer vorbestimmten Scanpunktauflösung, und
□ einem Erzeugen einer die Scanpunkte (62) aufweisenden Punktwolke,
**dadurch gekennzeichnet, dass**
• der Aufbau ferner ein Abbildungssystem (50) mit einer eine Fokussiergruppe aufweisenden Abbildungsoptik und einer Bildebene zur Erzeugung und graphischen Bereitstellung einer Abbildung eines Sichtfeldes (56) aufweist, wobei
□ das Sichtfeld (56) durch das Abbildungssystem (50) und die Strahlumlenkeinheit (30) definiert ist und zusammen mit der Messachse vermittels der Strahlumlenkeinheit (30) ausrichtbar ist und
□ die Abbildung des Sichtfeldes (56) in der Bildebene mittels einer Abbildungsfokussierung durch die Fokussiergruppe graphisch scharf bereitstellbar ist, und
• das Vermessungsgerät (1,2) einen Einzelpunktmessmodus aufweist, wobei in dessen Rahmen
□ die Messachse auf einen Zielpunkt (63) ausrichtbar ist, insbesondere auf ein retro-reflektierendes Prisma, und
□ bei Auslösung einer Einzelpunktmessung automatisch gesteuert durch die Steuerungs- und Verarbeitungseinheit die Entfernung zum Zielpunkt (63) und die Ausrichtung der Messachse sowie eine Position des Zielpunkts (63) in Abhängigkeit von der Entfernung und von der Ausrichtung der Messachse bestimmt werden.

2. Vermessungsgerät (1,2) nach Anspruch 1,
**dadurch gekennzeichnet, dass**
der Aufbau (20) einen Verstellmechanismus mit einem Drehknopf (25,25a,26,26a) zur Ausrichtung der Strahlumlenkeinheit (30) aufweist, wobei die Strahlumlenkeinheit (30) durch manuelle Betätigung des Drehknopfes (25,25a,26,26a) ausrichtbar ist.

3. Vermessungsgerät (1,2) nach Anspruch 1 oder 2,
**dadurch gekennzeichnet, dass**
der Aufbau (20) ein Okular (21) zur graphischen Bereitstellung der Abbildung aufweist, insbesondere zusammen mit einer die Emissionsrichtung anzeigenden Markierung.

4. Vermessungsgerät (1,2) nach einem der Ansprüche 1 bis 3,
**dadurch gekennzeichnet, dass**
der Aufbau (20) eine Messkamera (52) zur Erfassung der Abbildung aufweist, insbesondere wobei die graphische Bereitstellung der Abbildung mittels einer mit der Messkamera (52) zusammenwirkenden elektro-optischen Anzeige erfolgt.

5. Vermessungsgerät (1,2) nach Anspruch 4,
**dadurch gekennzeichnet, dass**
der Aufbau (20) eine Übersichtskamera (35) mit einem Übersichts-Sichtfeld (59a,59b,59c) aufweist, wobei das Übersichts-Sichtfeld (59a,59b,59c) grösser als ein Sichtfeld (56a) der Messkamera (52) ist, insbesondere wobei das Übersichts-Sichtfeld (59a,59b,59c) vermittels der Strahlumlenkeinheit (30) ausrichtbar ist.

6. Vermessungsgerät (1,2) nach einem der Ansprüche 1 bis 5,
**dadurch gekennzeichnet, dass**
das Abbildungssystem (50) eine optische Zoomgruppe zur Variation eines Abbildungsmassstabes der Abbildung auf der Bildebene aufweist, und/oder
die Strahlumlenkeinheit (30) als reflektierendes Umlenkelement ausgebildet ist, insbesondere als Spiegel.

7. Vermessungsgerät (1,2) nach einem der Ansprüche 1 bis 6,
**dadurch gekennzeichnet, dass**
das Vermessungsgerät (1,2) ferner eine Einzelpunktscanfunktionalität aufweist, wobei bei Ausführung der Einzelpunktscanfunktionalität
• zu einer Vielzahl von Einzelpunkten innerhalb eines Einzelpunktbereichs jeweils die Entfernung und die Ausrichtung der Messstrahlung bestimmt werden,
• eine die Einzelpunkte aufweisende Einzelpunkt-Punktwolke erzeugt wird und
• aus der Einzelpunkt-Punktwolke mittels eines Algorithmus zur Punktwolkenanalyse, insbesondere mittels Bildverarbeitung, die Position des Zielpunkts abgeleitet wird.

8. Vermessungsgerät (1,2) nach einem der Ansprüche 1 bis 7,
**dadurch gekennzeichnet, dass**
• im Einzelpunktmessmodus die Bestimmung der Entfernung zum Zielpunkt (63) in einem ersten Entfernungsmessmodus erfolgt, wobei eine bestimmte Anzahl von Entfernungsmesswerten für den Zielpunkt (63) bestimmt und gemittelt wird, und
• im Rahmen der Scanfunktionalität die Bestimmung der Entfernung zu den Scanpunkten (62) in einem zweiten Entfernungsmessmodus erfolgt, wobei eine im Vergleich zu dem ersten Entfernungsmessmodus geringere Anzahl von Entfernungsmesswerten, insbesondere ein einziger Entfernungsmesswert, für jeweils einen der Scanpunkte (62) bestimmt und gegebenenfalls gemittelt wird.

9. Vermessungsgerät (1,2) nach einem der Ansprüche 1 bis 8,
**dadurch gekennzeichnet, dass**
das Vermessungsgerät (1,2) eine derart ausgestaltet Umschaltfunktion aufweist, dass bei Ausführung der Umschaltfunktion ein Umschalten zwischen dem Einzelpunktmessmodus und der Scanfunktionalität erfolgt, insbesondere zwischen dem
Einzelpunktmessmodus, der Scanfunktionalität oder der Einzelpunktscanfunktionalität, insbesondere in Abhängigkeit einer Benutzereingabe.

10. Vermessungsgerät (1,2) nach einem der Ansprüche 1 bis 9,
**dadurch gekennzeichnet, dass**
das Vermessungsgerät (1,2) einen Neigungssensor (44) zur Messung einer Neigung des Vermessungsgeräts (1,2) relativ zum Gravitationsvektor aufweist, wobei in Abhängigkeit von einer gemessenen Neigung ein Messwert für die Ausrichtung der Messstrahlung (55) korrigierbar ist.

11. Vermessungsgerät nach einem der Ansprüche 1 bis 10, **dadurch gekennzeichnet, dass**
das Abbildungssystem (50) ein
Strahlvariationsmodul (70,95) zur Abschwächung und/oder Aufweitung und/oder wellenlängenabhängigen Filterung durch Einbringung des Strahlvariationsmoduls (70,95) in einen Strahlengang der Messstrahlung (55) aufweist.

12. Vermessungsgerät (1,2) nach einem der Ansprüche 1 bis 11,
**dadurch gekennzeichnet, dass**
der Aufbau (20) eine Anziel- und
Zielverfolgungsvorrichtung mit einem
positionssensitiven Detektor aufweist, wobei eine an einer Reflektoreinheit (63) reflektierte Messstrahlung (56b) mit dem positionssensitiven Detektor erfassbar ist und eine Ablage der erfassten Messstrahlung (56b) relativ zu einem Referenzpunkt auf dem Detektor bestimmbar ist, insbesondere wobei die Anziel- und Zielverfolgungsvorrichtung im Abbildungssystem (50) angeordnet ist.

13. Vermessungsgerät (1,2) nach Anspruch 12,
**dadurch gekennzeichnet, dass**
die Anziel- und Zielverfolgungsvorrichtung eine weitere Strahlquelle (96) zur Emission von Laserstrahlung aufweist, insbesondere wobei eine an der Reflektoreinheit (63) reflektierte Laserstrahlung als Messstrahlung (56b) zur Bestimmung der Ablage auf dem positionssensitiven Detektor heranziehbar ist, insbesondere wobei
die Messachse in Abhängigkeit von der Ablage automatisch gesteuert derart ausrichtbar ist, dass die Messstrahlung (55) fortlaufend auf ein Zentrum der Reflektoreinheit (63) ausgerichtet wird.

14. Vermessungsgerät (1,2) nach einem der Ansprüche 1 bis 13,
**dadurch gekennzeichnet, dass**
der Aufbau (20) ein Zielsuchmodul (33) mit einer Sendeeinheit zur Emission von Suchstrahlung in Form eines Lichtfächers und einer Empfangseinheit zur Detektion von zumindest einem Teil einer reflektierten Suchstrahlung aufweist.

15. Messverfahren zur Positionsbestimmung von zumindest einem Punkt mit einem Vermessungsgerät (1,2) gemäss einem der Ansprüche 1 bis 14, mit
**dadurch gekennzeichnet, dass**
im Rahmen des Messverfahrens selektiv durch Auswahl eines Benutzers ausgeführt wird
• ein Scannen mit
□ einem Rotieren der Strahlumlenkeinheit (30) um die Horizontalachse (31) und einem Schwenken des Aufbaus (20) um die Stehachse (11), insbesondere gleichzeitig,
□ einem Bestimmen der jeweiligen Entfernung und der jeweiligen Ausrichtung der Messstrahlung (55) für diejenigen Scanpunkte (62) innerhalb eines bestimmten Scanbereichs (61), insbesondere in einer vorbestimmten Scanpunktauflösung, und
□ einem Erzeugen einer die Scanpunkte (62) aufweisenden Punktwolke
oder
• ein Einzelpunktmessen mit
□ einem hochpräzisen Ausrichten der Messstrahlung (55) auf einen Zielpunkt (63),
□ einem Bestimmen der Entfernung zum Zielpunkt (63) und der Ausrichtung der Messachse, und
□ einem Bestimmen einer Position des Zielpunkts (63) in Abhängigkeit von der Entfernung und von der Ausrichtung der Messachse.
